# EUROPÄISCHE PATENTSCHRIFT

(11) **EP 0 983 438 B1**
(45) Veröffentlichungstag und Bekanntmachung des Hinweises auf die Patenterteilung: **07.01.2004**
(21) Anmeldenummer: 98959752.1
(22) Anmeldetag: 22.10.1998
(51) Int. Cl.: F04B 1/04, F02M 63/00

(54) **RADIALKOLBENPUMPE ZUR KRAFTSTOFFHOCHDRUCKVERSORGUNG**
RADIAL PISTON PUMP FOR HIGH PRESSURE FUEL SUPPLY
POMPE A PISTONS RADIAUX POUR L'ALIMENTATION HAUTE PRESSION EN CARBURANT

(30) Priorität: 04.02.1998 DE 19804275
(43) Veröffentlichungstag der Anmeldung: 08.03.2000
(73) Patentinhaber: ROBERT BOSCH GMBH, 70442 Stuttgart (DE)
(72) Erfinder: KUHN, Uwe, D-72585 Riederich (DE); SCHWARZ, Thomas, D-73614 Schorndorf (DE)
(86) Internationale Anmeldenummer: PCT/DE1998/003101
(87) Internationale Veröffentlichungsnummer: WO 1999/040317

(56) Entgegenhaltungen:
- DE-A- 3 722 988
- DE-A- 4 305 791
- US-A- 3 182 901
- US-A- 4 671 743
- US-A- 5 017 108

## Beschreibung

### Stand der Technik

Die Erfindung betrifft eine Radialkolbenpumpe zur Kraftstoffhochdruckversorgung bei Kraftstoffeinspritzsystemen von Brennkraftmaschinen, insbesondere bei einem Common-Rail-Einspritzsystem, mit einer in einem Pumpengehäuse gelagerten Antriebswelle, die einen exzentrisch ausgebildeten Wellenabschnitt aufweist, auf dem ein Ring durch eine Lagerbuchse gleitend gelagert ist, wobei der Ring mit vorzugsweise mehreren bezüglich der Antriebswelle radial in einem jeweiligen Zylinderraum angeordneten Kolben zusammenwirkt, wobei der exzentrische Wellenabschnitt und der Ring in axialer Richtung durch Anlaufflächen fixiert sind und zwischen der Lagerbuchse und dem exzentrischen Wellenabschnitt ein Lagerspalt vorgesehen ist, in den aus dem Inneren des Pumpengehäuses Schmiermittel gelangen kann. Eine gattungsgemäße Radialkolbenpumpe ist z.B. aus der Offenlegungsschrift DE 43 05 791 A1 bekannt.

Aufgabe der Erfindung ist es, die Versorgung des Lagerspaltes mit Schmiermittel zu verbessern, um einen volltragfähigen Schmierfilm zu gewährleisten.

Das Problem ist bei einer Radialkolbenpumpe zur Kraftstoffhochdruckversorgung bei Kraftstoffeinspritzsystemen von Brennkraftmaschinen, insbesondere bei einem Common-Rail-Einspritzsystem, mit einer in einem Pumpengehäuse gelagerten Antriebswelle, die einen exzentrisch ausgebildeten Wellenabschnitt aufweist, auf dem ein Ring durch eine Lagerbuchse gleitend gelagert ist, wobei der Ring mit vorzugsweise mehreren bezüglich der Antriebswelle radial in einem jeweiligen Zylinderraum angeordneten Kolben zusammenwirkt, wobei der exzentrische Wellenabschnitt und der Ring in axialer Richtung durch Anlaufflächen fixiert sind und zwischen der Lagerbuchse und dem exzentrischen Wellenabschnitt ein Lagerspalt vorgesehen ist, in den aus dem Inneren des Pumpengehäuses Schmiermittel gelangen kann, dadurch gelöst, daß die Nabenstirnseiten des Pumpengehäuses konisch ausgebildet sind, so daß sich ein keilförmiger Spalt ergibt, der sich zu dem Lagerspalt hin verjüngt. Dadurch wird die Verbindung zwischen dem Innenraum des Pumpengehäuses und dem Lagerspalt vergrößert und der Schmiermitteleintritt in den Lagerspalt begünstigt.

Eine besondere Ausführungsart der Erfindung ist dadurch gekennzeichnet, daß die Nabenstirnseiten auf der Rückseite des Anlaufbundes von Axiallagern ausgebildet sind. Wenn die Antriebswelle beispielsweise über schrägverzahnte Zahnräder vom Motor angetrieben wird, hat das zur Folge, daß Kräfte in axialer Richtung auf die Welle aufgebracht werden. In diesem Fall empfiehlt sich der Einbau eines Axialgleitlagers, das die Axialkräfte aufnimmt. Bei einem solchen Axialgleitlager kann die Rückseite des Anlaufbundes der Flanschbuchse beispielsweise abgeschrägt werden, um einen keilförmigen Spalt zu erzeugen. Dadurch wird die Schmiermittelversorgung des Lagerspalts verbessert.

Eine weitere besondere Ausführungsart der Erfindung ist dadurch gekennzeichnet, daß die Nabenstirnseiten mindestens eine Schaufel aufweisen, die einseitig so ausgerichtet ist, daß Schmiermittel aus dem Pumpengehäuse zu dem Lagerspalt gefördert wird. Die Förderung des Schmiermittels wirkt der Fliehkraft entgegen, welche die Schmiermittelversorgung beeinträchtigt. Wenn nur eine Schaufel an der Anlauffläche angebracht ist, muß diese genau positioniert sein, damit das Schmiermittel an die richtige Stelle in dem Lagerspalt gefördert wird. Das Vorsehen von mehreren Schaufeln ist zwar teurer in der Herstellung, liefert aber den Vorteil, daß keine lageorientierte Montage erforderlich ist.

Eine weitere besondere Ausführungsart der Erfindung ist dadurch gekennzeichnet, daß die Schaufel bezüglich einer Radialen symmetrisch ausgebildet ist. Die symmetrische Gestalt der Schaufel hat den Vorteil, daß die Förderwirkung unabhängig von der Drehrichtung der Antriebswelle erzielt wird.

Eine weitere besondere Ausführungsart der Erfindung ist dadurch gekennzeichnet, daß die Schaufeloberfläche eben ausgebildet ist. Die ebenen Schaufeln haben den Vorteil, daß sie einfach und kostengünstig herzustellen sind.

Eine weitere besondere Ausführungsart der Erfindung ist. dadurch gekennzeichnet, daß die Schaufeloberfläche gekrümmt ausgebildet ist. Mit den gekrümmten Schaufeln kann mehr Schmiermittel in den Lagerspalt gefördert werden, weil diese Form strömungstechnisch günstiger ist.

Weitere Vorteile, Merkmale und Einzelheiten der Erfindung ergeben sich aus den Unteransprüchen sowie der nachfolgenden Beschreibung, in der unter Bezugnahme auf die Zeichnungen verschiedene Ausführungsbeispiele im Einzelnen beschrieben sind. Dabei können die in den Ansprüchen und in der Beschreibung erwähnten Merkmale jeweils einzeln für sich oder in beliebiger Kombination erfindungswesentlich sein.
- Figur 1: zeigt eine Teilansicht eines Schnitts längs zu der Antriebswelle einer ersten Ausführungsform einer erfindungsgemäßen Radialkolbenpumpe;
- Figur 2: zeigt die Ansicht eines Schnitts längs zu der Antriebswelle einer zweiten Ausführungsform einer erfindungsgemäßen Radialkolbenpumpe;
- Figur 3: zeigt den Lagerspalt aus Figur 2 in einer vergrößerten Teilansicht;
- Figur 4: zeigt einen Ausschnitt von der in Figur 2 dargestellten Radialkolbenpumpe;
- Figuren 5 bis 8: zeigen verschieden Ausführungsformen der Schaufeln, die jeweils im Schnitt entlang der Linie A-B in Figur 4 dargestellt sind; und
- Figur 9: zeigt eine weitere Ausführungsform der vorliegenden Erfindung.

Radialkolbenpumpen werden insbesondere in Common-Rail-Einspritzsystemen zur Kraftstoffversorgung von Dieselmotoren eingesetzt. Dabei bedeutet "common rail" soviel wie "gemeinsame Leitung", "gemeinsame Schiene" oder "gemeinsame Verteilerleiste". Im Gegensatz zu herkömmlichen Hochdruckeinspritzsystemen, in denen der Kraftstoff über getrennte Leitungen zu den einzelnen Brennräumen gefördert wird, werden die Einspritzdüsen in Common-Rail-Einspritzsystemen aus einer gemeinsamen Leitung gespeist.

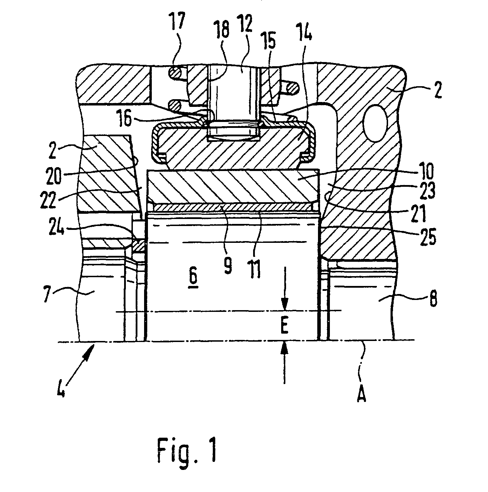

Die in Figur 1 im Schnitt nur teilweise dargestellte Radialkolbenpumpe umfaßt eine in einem Pumpengehäuse 2 gelagerte Antriebswelle 4 mit einem exzentrisch ausgebildeten Wellenabschnitt 6. Von dem exzentrischen Wellenabschnitt 6 gehen zwei Wellenzapfen 7, 8 aus, die drehbar in dem Gehäuse gelagert sind. Die Antriebswelle 4 ist so angetrieben, daß keine Kräfte in axialer Richtung auftreten. Auf dem exzentrischen Wellenabschnitt 6 ist ein Ring 10 durch eine Lagerbuchse 9 gleitend gelagert.

Zwischen der Lagerbuchse 9 und dem exzentrischen Wellenabschnitt 6 ist ein Lagerspalt 11 vorgesehen.

Gegen den Ring 10 stützen sich mehrere Kolben 12 ab. Die Anzahl der Kolben 12 beträgt bei einer bevorzugten Ausführungsform drei, wobei die Kolben jeweils um 120' versetzt zueinander angeordnet sind und jeweils an einer auf dem Ring 10 ausgebildeten Abflachung anliegen. Zwischen dem Kolben 12 und dem Ring 10 ist eine Platte 14 vorgesehen. Die Platte 14 ist durch einen Plattenhalter 15 an dem Kolben 12 gehalten. Der Plattenhalter 15 ist durch einen Sprengring 16 an dem Kolben 12 befestigt. Eine Feder 17 liegt an dem Plattenhalter 15 an und drückt die Platte 14 gegen den Ring 10.

Die Kolben 12 sind jeweils in einem Zylinderraum 18 zur Antriebswelle 4 in radialer Richtung hin- und herbewegbar aufgenommen. Die in Figur 1 dargestellte Radialkolbenpumpe dient dazu, Kraftstoff, der von einer Vorförderpumpe aus einem Tank geliefert wird, mit Hochdruck zu beaufschlagen. Der mit Hochdruck beaufschlagte Kraftstoff wird dann in die oben angesprochene gemeinsame Leitung gefördert. Im Förderhub werden die Kolben 12 infolge der Exzenterbewegung des Rings 8 von der Antriebswelle 4 weg bewegt. Im Saughub bewegen sich die Kolben 12 radial auf die Antriebswelle zu, um Kraftstoff in die Zylinderräume 18 zu saugen.

Im Inneren des Pumpengehäuses 2 befindet sich Schmiermittel (nicht dargestellt). Um die Zufuhr von dem Schmiermittel aus dem Inneren des Pumpengehäuses in den Lagerspalt 11 zu verbessern, sind in dem Gehäuseinnenraum an den Nabenstirnseiten Abschrägungen 20, 21 vorgesehen. Zwischen den Abschrägungen 20, 21 und dem Ring 10 sind zwei keilförmige Spalte 22, 23 ausgebildet. Die axiale Fixierung des exzentrischen Wellenabschnitts 6 erfolgt durch eine Anlaufscheibe 24 und eine Anlauffläche 25, die im Gehäuseinnenraum ausgebildet ist. Die axiale Fixierung des Rings 10 erfolgt ebenfalls durch die Anlaufscheibe 24 und die Anlauffläche 25, allerdings auf der bezogen auf die Achse A der Antriebswelle 4 gegenüberliegenden Seite, die in Figur 1 nicht dargestellt ist. Wie durch die Angabe der Exzentrizität E angedeutet ist, hat die Platte 14 in der in Figur 1 dargestellten Exzenterstellung den maximalen Abstand von der Achse A. Das bedeutet, der Kolben 12 befindet sich am oberen Totpunkt.

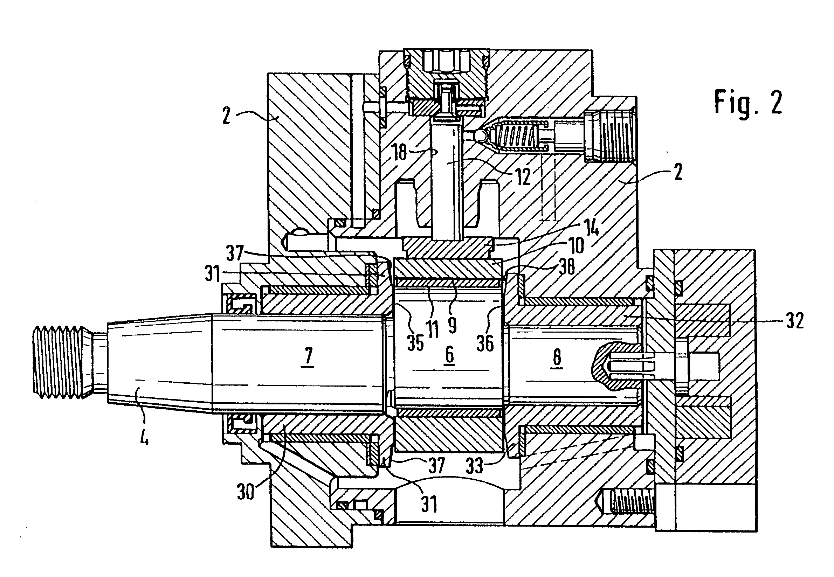

In Figur 2 ist eine zweite Ausführungsform einer erfindungsgemäßen Radialkolbenpumpe gezeigt, die der in Figur 1 ausschnittsweise dargestellten Radialkolbenpumpe ähnlich ist. Zur Bezeichnung gleicher Teile werden der Einfachheit halber gleiche Bezugszeichen verwendet. In einem Pumpengehäuse 2 ist eine Antriebswelle 4 mit einem exzentrischen Wellenabschnitt 6 drehbar gelagert. Ein Wellenzapfen 7 der Antriebswelle 4 ist durch eine Flanschbuchse 30 mit einem Bund 31 radial und axial gleitend gelagert. Ein Wellenzapfen 8 der Antriebswelle 4 ist durch eine Flanschbuchse 32 mit einem Bund 33 radial und axial gleitend gelagert. Die Flanschbuchsen 30 und 32 sind so angeordnet, daß die Bunde 31 und 33 einander zugewandt sind. Zwischen den Bunden 31 und 33 befindet sich der exzentrische Wellenabschnitt 6, der gegenüber einem Ring 10 mit einer Lagerbuchse 9 drehbar ist.

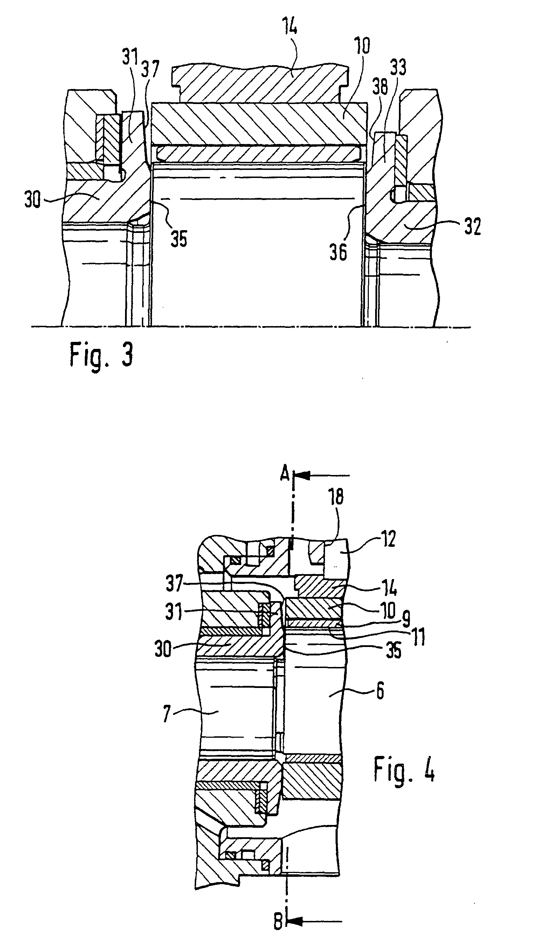

Zur axialen Fixierung liegen die Stirnflächen des exzentrischen Wellenabschnitts 6 an Anlageflächen 35, 36 an, die an den Stirnflächen der Bunde 31, 33 ausgebildet sind. An den Stirnflächen der Bunde 31, 33 sind zudem Abschrägungen 37, 38 vorgesehen, wie am besten in der vergrößerten Teilansicht von Figur 3 zu sehen ist. Die Abschrägungen 37, 38 sorgen dafür, daß ausreichend Schmiermittel aus dem Inneren des Pumpengehäuses 2 in einen Lagerspalt 11 gelangen kann, der zwischen der Lagerbuchse 9 und der Mantelfläche des exzentrischen Wellenabschnitts 6 ausgebildet ist. Der Lagerspalt 11 gehört zu einem Radialgleitlager, welches das Verdrehen des exzentrischen Wellenabschnitts 6 relativ zu dem Ring 10 ermöglicht.

Im Betrieb wird die Exzenterbewegung des exzentrischen Wellenabschnitts 6 über die Lagerbuchse 9, den Ring 10 und eine Platte 14 auf einen Kolben 12 übertragen, der in einem Zylinderraum 18 hin- und herbewegbar ist.

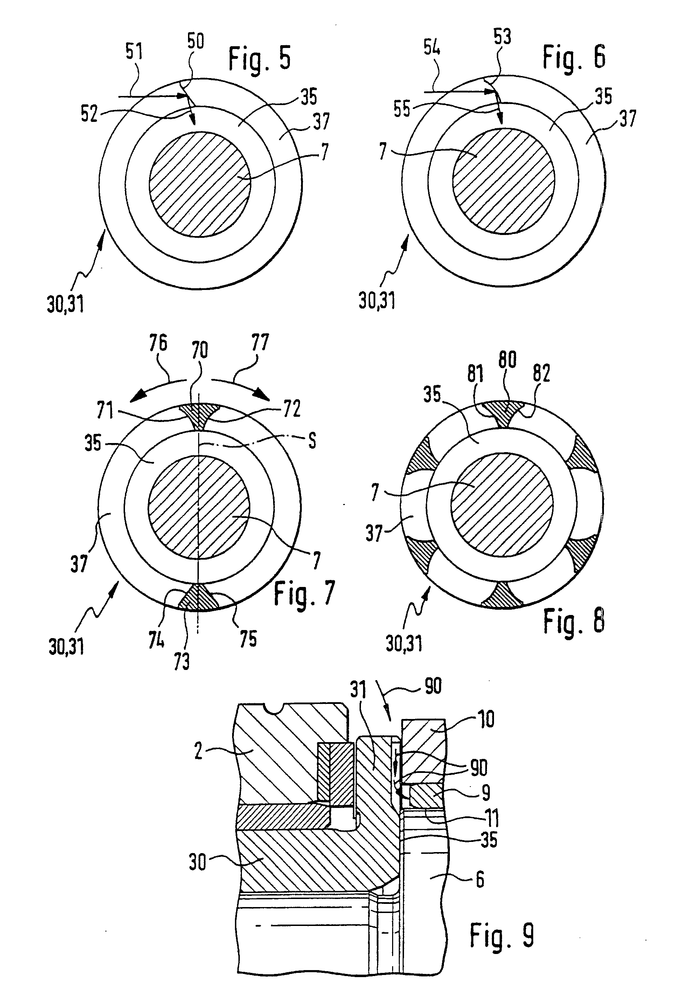

In Figur 4 ist ein weiterer Ausschnitt aus Figur 2 gezeigt, aus dem hervorgeht, wie die in den Figuren 5 bis 9 dargestellten Schnitte verlaufen. In den Figuren 5 bis 9 sieht man den Wellenzapfen 7 im Querschnitt. Konzentrisch zu dem Wellenzapfen 7 ist die Anlagefläche 35 von dem Bund 31 der Flanschbuchse 30 angeordnet. Die Anlagefläche 35 ist von der Abschrägung 37 umgeben, auf der unterschiedliche Schaufeln so angebracht sind, daß Schmiermittel in radialer Richtung nach innen gefördert wird.

Die in Figur 5 dargestellte Ausführungsform hat eine eben ausgebildete Schaufel 50, die bezogen auf eine Radiale leicht geneigt ist. Die Pfeile 51 und 52 deuten die Förderrichtung des Schmiermittels an, wenn sich die Antriebswelle mit der Flanschbuchse 30 gegen den Uhrzeigersinn dreht.

Die in Figur 6 dargestellte Ausführungsform hat eine gekrümmt ausgebildete Schaufel 53, die bezogen auf eine Radiale leicht geneigt ist. Die Pfeile 54 und 55 deuten die Förderrichtung des Schmiermittels an, wenn sich die Antriebswelle mit der Flanschbuchse 30 gegen den Uhrzeigersinn dreht.

Die in Figur 7 dargestellte Ausführungsform hat zwei diametral gegenüberliegende Schaufeln 70 und 73. Die Schaufel 70 hat zwei konkave Oberflächen 71 und 72, die bezogen auf eine Symmetrieachse S symmetrisch zueinander ausgebildet sind. Die Dicke der Schaufel 70 nimmt von innen nach außen zu. Die Schaufel 73 hat eine ähnliche Gestalt wie die Schaufel 70. Der einzige Unterschied zwischen den Schaufeln 70 und 73 besteht darin, daß die Oberflächen 74 und 75 der Schaufel 73 eben ausgebildet sind. Die symmetrische Ausbildung der Schaufeln 70 und 73 ermöglicht, daß in beiden Drehrichtungen 76, 77 Schmiermittel in den Lagerspalt gefördert wird.

In Figur 8 ist eine Ausführungsform gezeigt, bei der mehrere Schaufeln 80 mit gekrümmten Oberflächen 81, 82 an der Abschrägung 37 angebracht sind. Das hat den Vorteil, daß die Positionierung der Flachsbuchse 30 relativ zu dem exzentrischen Wellenabschnitt 6 (siehe Figur 4) bei der Montage an Bedeutung verliert.

In Figur 9 ist gezeigt, daß der zwischen dem Bund 37 und der Stirnfläche des Rings 10 vorgesehene Spalt statt keilförmig auch parallel ausgebildet sein kann. Durch eine oder mehrere Schaufeln wird trotzdem mehr Schmiermittel in den Lagerspalt 11 gefördert als bei herkömmlichen Radialkolbenpumpen, wie durch die Pfeile 90 angedeutet ist.

## Patentansprüche

1. Radialkolbenpumpe zur Kraftstoffhochdruckversorgung bei Kraftstoffeinspritzsystemen von Brennkraftmaschinen, insbesondere bei einem Common-Rail-Einspritzsystem, mit in einem Gehäuseinnenraum eines Pumpengehäuses (2) angeordneten Nabenstirnseiten (20, 21, 37, 38), und mit einer in dem Pumpengehäuse (2) gelagerten Antriebswelle (4), die einen exzentrisch ausgebildeten Wellenabschnitt (6) aufweist, auf dem ein Ring (10) durch eine Lagerbuchse (9) gleitend gelagert ist, wobei der Ring (10) mit vorzugsweise mehreren bezüglich der Antriebswelle (4) radial in einem jeweiligen Zylinderraum (18) angeordneten Kolben (12) zusammenwirkt, wobei der exzentrische Wellenabschnitt (6) und der Ring (10) in axialer Richtung durch Anlaufflächen (24, 25) fixiert sind und zwischen der Lagerbuchse (9) und dem exzentrischen Wellenabschnitt (6) ein Lagerspalt (11) vorgesehen ist, in den aus dem Inneren des Pumpengehäuses (2) Schmiermittel gelangen kann, **dadurch gekennzeichnet, daß** die Nabenstirnseiten (20, 21, 37, 38) des Pumpengehäuses (2) konisch ausgebildet sind, so daß sich ein keilförmiger Spalt ergibt, der sich zu dem Lagerspalt (11) hin verjüngt.

2. Radialkolbenpumpe nach Anspruch 1, **dadurch gekennzeichnet, daß** die Nabenstirnseiten (37, 38) auf einer Rückseite eines Anlaufbundes von Axiallagern (31, 33) ausgebildet sind.

3. Radialkolbenpumpe nach Anspruch 2, **dadurch gekennzeichnet, daß** die Nabenstirnseiten (37, 38) mindestens eine Schaufel (50, 53) aufweisen, die einseitig so ausgerichtet ist, daß Schmiermittel aus dem Pumpengehäuse (2) zu dem Lagerspalt (11) gefördert wird.

4. Radialkolbenpumpe nach Anspruch 3, **dadurch gekennzeichnet, daß** die Schaufel (70, 73, 80) bezüglich einer Radialen (S) symmetrisch ausgebildet ist.

5. Radialkolbenpumpe nach Anspruch 3 oder 4, **dadurch gekennzeichnet, daß** die Schaufeloberfläche (50, 74, 75) eben ausgebildet ist.

6. Radialkolbenpumpe nach Anspruch 3 oder 4, **dadurch gekennzeichnet, daß** die Schaufeloberfläche (53, 71, 72) gekrümmt ausgebildet ist.

## Claims

1. Radial piston pump for supplying fuel at high pressure in fuel injection systems of internal combustion engines, in particular in a common-rail injection system, having hub ends (20, 21, 37, 38) which are arranged in an interior of a pump housing (2), and having a drive shaft (4) which is mounted in the pump housing (2) and has a shaft section (6) which is formed eccentrically and on which a ring (10) is mounted in a sliding fashion by means of a bearing bushing (9), the ring (10) interacting with preferably a plurality of pistons (12) which are arranged radially with respect to the drive shaft (4), in a respective cylinder space (18), the eccentric shaft section (6) and the ring (10) being secured in the axial direction by means of run-off faces (24, 25) and a bearing gap (11), into which lubricant can pass from the interior of the pump housing (2), being provided between the bearing bushing (9) and the eccentric shaft section (6), **characterized in that** the hub ends (20, 21, 37, 38) of the pump housing (2) are of conical design so that a wedge-shaped gap is produced which tapers towards the bearing gap (11).

2. Radial piston pump according to Claim 1, **characterized in that** the hub ends (37, 38) are formed on a rear side of a run-up collar of axial bearings (31, 33).

3. Radial piston pump according to Claim 2, **characterized in that** the hub ends (37, 38) have at least one blade (50, 53) which is oriented on one side in such a way that lubricant is fed from the pump housing (2) to the bearing gap (11).

4. Radial piston pump according to Claim 3, **characterized in that** the blade (70, 73, 80) is of symmetrical design with respect to a radial line (S).

5. Radial piston pump according to Claim 3 or 4, **characterized in that** the surface (50, 74, 75) of the blade is of planar design.

6. Radial piston pump according to Claim 3 or 4, **characterized in that** the surface (53, 71, 72) of the blade is of curved design.

## Revendications

1. Pompe à pistons radiaux pour l'alimentation en carburant à haute pression de système d'injection de carburant de moteur à combustion interne et notamment d'un système d'injection à rampe commune comprenant un arbre d'entraînement (4) monté dans un corps de boîtier (2) et ayant des faces frontales de moyeu (20, 21, 37, 38) prévues dans l'intérieur du boîtier de pompe (2), cet arbre ayant un segment (6) excentré portant en coulissement un anneau (10) par l'intermédiaire d'un coussinet (9), l'anneau (10) coopérant de préférence avec plusieurs pistons (12) disposés radialement par rapport à l'axe d'entraînement (4) et chaque piston est logé dans un cylindre (18),
le segment d'arbre excentrique (6) et l'anneau (10) étant bloqués dans la direction axiale par des surfaces d'attaque (24, 25) et entre le coussinet (9) et le segment d'arbre excentrique (6) on a un intervalle de palier (11) dans lequel de l'agent lubrifiant peut arriver à partir de l'intérieur du corps de pompe (2),
**caractérisée en ce que**
des faces frontales de moyeu (20, 21, 37, 38) du corps de pompe (2) sont de forme conique pour aboutir à un intervalle en forme de coin qui diminue en direction de l'intervalle de palier (11).

2. Pompe à pistons radiaux selon la revendication 1,
**caractérisée en ce que**
les faces frontales de moyeu (37, 38) sont réalisées sur le côté arrière d'une collerette d'attaque des paliers axiaux (31, 33).

3. Pompe à piston radiaux selon la revendication 2,
**caractérisée en ce que**
les faces frontales (37, 38) du moyeu comportent au moins une pale (50, 53) alignée d'un côté de façon à transférer de l'agent lubrifiant à partir du corps de pompe (2) jusque dans l'intervalle de palier (11).

4. Pompe à pistons radiaux selon la revendication 3,
**caractérisée en ce que**
les pales (70, 73, 80) sont symétriques par rapport à la direction radiale S.

5. Pompe à pistons radiaux selon l'une des revendications 3 ou 4,
**caractérisée en ce que**
la surface des pales (50, 74, 75) est plane.

6. Pompe à pistons radiaux selon l'une des revendications 3 à 4,
**caractérisée en ce que**
la surface des pales (53, 71, 72) est cintrée.
